Europäisches Patentamt

European Patent Office

Office européen des brevets

(19)

(11) Publication number : **0 617 135 A1**

(12) **EUROPEAN PATENT APPLICATION**

(21) Application number : **94302166.7**

(22) Date of filing : **25.03.94**

(51) Int. Cl.$^5$ : **C22B 3/40**

(30) Priority : **26.03.93 ZA 932156**
**11.02.94 ZA 940949**

(43) Date of publication of application :
**28.09.94 Bulletin 94/39**

(84) Designated Contracting States :
**AT BE CH DE DK ES FR GB GR IE IT LI LU MC NL PT SE**

(71) Applicant : **MINTEK**
**200 Hans Strijdom Avenue**
**Randburg, Transvaal Province (ZA)**

(72) Inventor : **Preston, John Stephen**
**12 Villa Cora,**
**49 Parrot Street**
**Bromhof, Randburg (ZA)**

(74) Representative : **Jump, Timothy John Simon et al**
**Venner Shipley & Co.**
**20 Little Britain**
**London EC1A 7DH (GB)**

(54) **The production of cadmium.**

(57)   A process for the recovery of cadmium from other metals with which it is mixed, in particular zinc, nickel, or both, by solvent extraction is described. The solvent extractant is a synergistic combination of a trialkylphosphine sulphide ($R_3PS$) and a carboxylic acid extractant in an organic diluent. A preferred extractant combination is triisobutylphosphine sulphide and 3,5-diisopropylsalicylic acid.

EP 0 617 135 A1

**THIS INVENTION** relates to the production of cadmium and, more particularly, to the selective extraction of cadmium using a suitable solvent extractant system. The invention is especially concerned with the separation of cadmium from other metal ions, in particular, zinc and/or nickel.

Cadmium is generally found as a minor constituent in zinc ores and is extracted together with the zinc during leaching of the ore.

As far as applicant is aware, such cadmium has usually been recovered by cementation using zinc, followed by dissolution, purification, and electrolytic deposition.

Cadmium is also found, together with nickel, in wastes generated during the manufacture of nickel-cadmium batteries as well as in scrap battery material. It is thus desirable to separate the cadmium and nickel in such wastes and scrap for re-use.

It appears that solvent extraction has not been employed commercially for the recovery of cadmium in view of the fact that solvents have not been available which are adequately selective towards cadmium. This is particularly so where cadmium occurs together with zinc, nickel, or both.

It has now been found that the solvent extraction of cadmium is indeed possible using particular solvent extraction systems.

It is, accordingly, the object of this invention to provide a process for the recovery of cadmium using solvent extraction as a separation step.

In accordance with this invention, there is provided a process for the selective solvent extraction of cadmium from aqueous solutions thereof in which the cadmium is present together with either or both of nickel and zinc, the process comprising the contacting of the aqueous solution with an organic phase comprising 0,2 to 1M of a trialkylphosphine sulphide ($R_3PS$) together with from 0,2M to 1M carboxylic acid extractant in an organic diluent; separating the resultant aqueous and organic phases; and, stripping cadmium from the organic extractant phase.

Further features of the invention provide for the two extractants to be present in substantially equal proportions and preferably at a concentration of from 0,25M to about 0,5M each; for the organic diluent to be an aromatic diluent, in particular xylene; for the organic to aqueous phase ratio to be of from 1 : 2 to 2 : 1, preferably 2 : 3; for the pH of the aqueous solution to be adjusted according to the equilibrium pH of cadmium extraction when compared with that of zinc and/or nickel as the case may be; for the contacting to be carried out in a plurality of countercurrent stages, preferably three or four; for stripping of the cadmium from the organic phase to be achieved using sulphuric acid, preferably in two stages and at a high organic to aqueous phase ratio, in particular about 10 : 1; and for the resultant aqueous strip solution, after optional purification, to be subjected to electro-winning of cadmium metal, or to be treated for the recovery of cadmium sulphate by crystallisation.

Still further features of the invention provide for the trialkylphosphine sulphide to be triisobutylphosphine sulphide (hereinafter referred to as TIBPS); and for the carboxylic acid extractant to be 3,5-diisopropylsalicylic acid (hereinafter referred to as DIPSA).

In all cases the selectivity of a single solvent extractant, or the combination extractant according to this invention, was gauged by determining the difference between the pH values at which 50% of the respective metal is extracted by way of the formula $pH_{0,5}^{Cd} - pH_{0,5}^{Zn} = x$ pH units. In a case where "x" is a positive quantity the selectivity is towards zinc, and in the event that "x" is negative, the selectivity is towards cadmium.

In extraction tests from solutions containing 0,05M of cadmium and zinc nitrates in a 1,00M sodium nitrate solution by different carboxylic acids in xylene at 0,50M strength the following results were obtained.

## TABLE 1

| ACID | $pH_{0.5}^{Cd} - pH_{0.5}^{Zn}$ |
|------|-------------------------------|
| Versatic 10 | 0,61 |
| 2-Ethyl-2-butylhexanoic | 0,62 |
| 2-Ethylhexanoic | 0,15 |
| 3,5,5-Trimethylhexanoic | 0,01 |
| 2-Bromodecanoic | - 0,34 |
| 2-Bromo-3,5,5-trimethylhexanoic | - 0,27 |
| 3,5-Diisopropylsalicylic (DIPSA) | - 0,18 |

No satisfactory selectivity towards cadmium was shown, even in the case of DIPSA.

Further tests were then carried out with the carboxylic acid 2-bromo-3,5,5-trimethylhexanoic acid (hereinafter referred to as BTMHA) at a strength of 0,25M in the presence of 0,25M of one of a variety of different solvating extractants in xylene. The results are shown in Table 2.

## TABLE 2

| SOLVATING EXTRACTANT | $pH_{0.5}$ | | |
|----------------------|-----|------|-------|
| | Cd | Zn | Cd-Zn |
| None | 4,56 | 4,80 | - 0,24 |
| Tri-n-butyl phosphate | 5,11 | 5,14 | - 0,03 |
| Di-n-butyl n-butylphosphonate | 5,07 | 5,02 | 0,05 |
| n-Butyl di-n-butylphosphinate | 5,02 | 4,84 | 0,18 |
| Octanal oxime | 3,42 | 3,90 | - 0,48 |
| Triisobutylphosphine sulphide | 3,71 | 4,56 | - 0,85 |

The combination of TIBPS and BTMHA showed a more marked selectivity towards cadmium.

Further tests were then carried out on other combinations of carboxylic acids and sulphur-donor ligands and the results are set out in Table 3.

## TABLE 3

| CARBOXYLIC ACID | S-DONOR | pH$_{0,5}$ | | |
| --- | --- | --- | --- | --- |
| | | Cd | Zn | Cd-Zn |
| Naphthenic acid[a] | None | 5,58 | 5,45 | 0,12 |
| | TIBPS | 5,22 | 5,46 | - 0,24 |
| | DHS[b] | 5,53 | 5,43 | 0,10 |
| DIPSA | None | 4,73 | 4,91 | - 0,18 |
| | TIBPS | 2,84 | 4,31 | - 1,47 |
| | TIBPS[c] | 2,99 | 4,58 | - 1,59 |

[a]   A substituted cycloalkanecarboxylic acid

[b]   Di-n-hexyl sulphide (Daihachi SFI -6)

[c]   0,25M DIPSA plus 1,00M TIBPS

It will be noted that the combination of DIPSA and TIBPS gave by far the best results. In these tests the two extractants were present in a concentration of 0,50M in xylene.

Other concentrations of the two extractants were tested and the results are shown in Table 4 below :-

## TABLE 4

| Effect of extractant concentration on separation of cadmium and zinc by mixtures of DIPSA and TIBPS in xylene | | | | |
| --- | --- | --- | --- | --- |
| Extractant concn. (M) | | pH$_{0.5}$ | | |
| DIPSA | TIBPS | Cd | Zn | Cd-Zn |
| 0.25 | 0.00 | 5.11 | 5.18 | -0.07 |
| 0.50 | 0.00 | 4.73 | 4.91 | -0.18 |
| 0.25 | 0.10 | 3.89 | 4.86 | -0.97 |
| 0.25 | 0.25 | 3.39 | 4.71 | -1.32 |
| 0.25 | 1.00 | 2.99 | 4.59 | -1.60 |
| 0.50 | 0.50 | 2.84 | 4.31 | -1.48 |

These results again illustrate the synergistic effects and also the fact that equal concentrations of the two extractants are effective. No significant advantage is achieved by adding substantially greater proportions of TIBPS.

Further tests showed that the same synergistic effect is present when a sulphate medium instead of a nitrate medium is employed.

Tests on different diluents show that xylene was to be preferred although the synergistic effect was present, but to a lesser extent, with other diluents. However, for a commercial process a commercial diluent would be practical and two such diluents were tested. The results are shown in Table 5 below. Shellsol 2325 would be chosen although the solubility of DIPSA in this solvent is limited to 0,4M. Also, these tests indicated that modifiers are preferably to be avoided.

## TABLE 5

Effect of diluents on the extraction of cadmium and zinc (0.05M)

from 0.10M sodium sulphate by mixtures of DIPSA (0.50M)[a] and

TIBPS (0.50M)

| Diluent | Modifier | $pH_{0.5}$ | | |
|---------|----------|-----|-----|-------|
| | | Cd | Zn | Cd-Zn |
| Shellsol AB | None | 3.44 | 4.57 | -1.13 |
| Shellsol 2325 | None | 3.16 | 4.64 | -1.48 |
| Xylene | None | 3.19 | 4.62 | -1.43 |
| Xylene | TBP[b] | 3.73 | 4.84 | -1.11 |
| Xylene | Isodecanol[b] | 3.59 | 4.86 | -1.27 |

[a]  Except for Shellsol 2325, in which the maximum solubility of DIPSA is 0.4M

[b]  10 percent by volume

Tests conducted on a variety of base metals showed that good selectivity is achieved using a solvent system of this invention except in cases of lead and copper. However, the latter metals are considerably nobler than cadmium and would therefore not remain in solution even in the presence of only a small quantity of undissolved cadmium metal. The results are shown in Table 6 below.

## TABLE 6

| Extraction of divalent base metals (0.05M as nitrate) from 1.00M sodium nitrate by DIPSA (0.50M) and its mixture with TIBPS (0.50M) in xylene | | | | | |
|---|---|---|---|---|---|
| Metal (ME) | DIPSA | | DIPSA + TIBPS | | $\Delta pH_{0.5}$ |
| | $pH_{0.5}$ | $pH_{0.5}^{Cd\text{-}Me}$ | $pH_{0.5}$ | $pH_{0.5}^{Cd\text{-}Me}$ | |
| Cd | 4.73 | 0.00 | 2.84 | 0.00 | 1.89 |
| Zn | 4.91 | -0.18 | 4.31 | -1.47 | 0.60 |
| Mn | 5.37 | -0.64 | 5.38 | -2.54 | -0.01 |
| Fe | 5.41 | -0.68 | 5.41 | -2.57 | 0.00 |
| Co | 5.34 | -0.61 | 5.35 | -2.51 | -0.01 |
| Ni | 5.26 | -0.53 | 5.30 | -2.46 | -0.04 |
| Cu | 3.78 | 0.95 | 2.2 | 0.64 | 1.6 |
| Pb | 3.42 | 1.31 | 2.93 | -0.09 | 0.49 |
| Ca | 5.71 | -0.98 | 5.81 | -2.97 | -0.10 |
| Mg | 6.21 | -1.48 | 6.34 | -3.50 | -0.13 |

On the basis of the test work carried out and calculations using McCabe-Thiele diagrams, a 0,5M DIPSA and 0,5M TIBPS extractant system in xylene; and an aqueous phase containing 5,5g/$l$ of cadmium and 6,9g/$l$ zinc as sulphate in 0,10M sodium sulphate, it was shown that excellent separation from zinc could be achieved at a pH of 3,6 in three countercurrent stages at an organic to aqueous phase ratio of 2 : 3. Table 7 sets out the results obtained. The cadmium product recovered was 98,6% at a purity of 99,7% and the zinc recovery was 99,7% at a 98,9% purity from the raffinate.

## TABLE 7

| STAGE | Metal concentration (g.l⁻¹) | | | | ß(Cd/Zn) |
|---|---|---|---|---|---|
| | Aqueous phase | | Organic phase | | |
| | Cd | Zn | Cd | Zn | |
| Feed | 5,52 | 6,93 | 0,00 | 0,00 | |
| 1 | 2,84 | 6,79 | 8,88[a] | 0,03[a] | 760 |
| 2 | 0,60 | 6,70 | 3,98 | 0,04 | 1110 |
| 3 | 0,07[b] | 6,89[b] | 0,71 | 0,05 | 1300 |

[a]   Loaded organic phase
[b]   Raffinate

It was found that effective scrubbing of the solvent could be achieved using dilute (0,01M) sulphuric acid in two stages followed by stripping.

Effective stripping of the cadmium from the solvent extraction system described above was effected at an organic to aqueous ratio of 7:1 using dilute sulphuric acid in two countercurrent stages.

The same countercurrent batch tests were then carried out on a cadmium nickel mixture and the results obtained are given in Table 8.

## TABLE 8

| STAGE | Metal concentration (g.l⁻¹) | | | | ß(Cd/Ni) (x 10³) |
|---|---|---|---|---|---|
| | Aqueous phase | | Organic phase | | |
| | Cd | Ni | Cd | Ni | |
| Feed | 5,16 | 24,0 | 0,00 | 0,00 | |
| 1 | 0,38 | 23,8 | 8,25[a] | 0,02[a] | 29 |
| 2 | 0,02 | 24,3 | 1,05 | 0,01 | 128 |
| 3 | 0,00[b] | 23,6[b] | 0,02 | 0,03 | 164 |

[a]   Loaded organic phase
[b]   Raffinate

The tests described above led to the following continuous countercurrent arrangement being proposed.

A configuration of four extraction stages, two scrubbing stages, and two stripping stages was adopted for miniplant trials. In a full-scale plant, the spent scrub liquor would be recycled to the extraction circuit, although this was not effected until late in the miniplant trial in order to facilitate material balance calculations. The plant was operated for a total running period in excess of 200 hours, during which time some 320 litres of aqueous feed liquor was processed. The trial was divided into two time periods : during the first of these the feed liquor was prepared directly by dilution of the concentrated leach liquor, whilst in the second period the thallium and iron contents of the leach liquor were removed by precipitation according to known methods.

The initial feed solution typically contained 16 $gl^{-1}$ of cadmium and 3 $gl^{-1}$ of zinc, together with much smaller amounts of thallium, iron and lead (70, 26 and 2 $mgl^{-1}$, respectively). Recycle of raffinate in both periods of the trial caused the zinc content to build up to 8-9 $gl^{-1}$, and that of lead to 6-7 $mgl^{-1}$. During the period in which no pretreatment of the feed liquor was undertaken, the contents of thallium and iron built up to 170 and 80 $mgl^{-1}$ respectively, whereas during the period in which these metals were removed by precipitation, these levels usually remained at less than 30 and 5 $mgl^{-1}$, respectively.

The organic feed consisted of 0.4M DIPSA and 0.4M TIBPS in Shellsol 2325 during the first period of the trial and 0.35M of each extractant during the second period, the dilution being made in order to prevent traces of DIPSA from crystallising in the mixer-settlers. The scrub solution consisted of 0.10M sulphuric acid, whilst the solution used for stripping was 1.0M sulphuric acid. Typical flowrates were : organic phase 35, aqueous feed 15, strip solution 3, and scrub solution 1.2 $ml\ min^{-1}$. These flowrates corresponded to residence times of about 2 minutes in each mixer of the extraction circuit and, taking into account the internal recycle, to residence times of 19 and 8 minutes in each mixer of the scrub and the strip circuits, respectively.

Concentrated ammonia solution was introduced into each extraction mixer by individual peristaltic pumps. Owing to space restrictions, there was no provision for automatic pH control in the extraction stages, the pH values recorded in the settlers being altered as necessary by manual adjustment to the ammonia flowrates. The optimum pH values for each stage were found to lie in the range 3.7 to 3.8.

The extractions of cadmium and the major impurities during the first periods of the trial are given in Table 9. It can be seen that zinc is the least troublesome of the impurities, the average extraction of this metal being only 2 to 4 percent throughout the trial. The worst recorded co-extraction of zinc (25 percent) resulted from a fortuitous combination of high extraction pH (4.0) and high organic-to-aqueous extraction ratio (2.6 instead of 2.3).

Amongst the other impurities lead is co-extracted to the greatest extent, as would be expected from the proximity of its $pH_{0.5}$ value to that of cadmium in the DIPSA-TIBPS system (cf. Table 6). Fortunately, only very low levels of lead are encountered in the feed liquor.

Table 9 also shows the concentration profiles in the scrubbing and stripping stages.

## TABLE 9

| Concentration profiles in the miniplant during the first period of the miniplant trial | | | | | | | | | |
|---|---|---|---|---|---|---|---|---|---|
| Stage | | | Metal concentrations (mg $l^{-1}$)[a] | | | | | | pH |
| | Cdg/l | Zng/l | Tl | Fe | Pb | Co | As | | |
| Feed | 15.6 | 9.3 | 167 | 81 | 6.8 | 3.4 | 2.7 | | 3.8 |
| E1 | 9.0 | 10.2 | 252 | 80 | 5.1 | 3.3 | 2.5 | | 3.8 |
| E2 | 1.8 | 11.7 | 350 | 85 | 3.9 | 3.3 | 3.0 | | 3.9 |
| E3 | 0.14 | 9.4 | 156 | 74 | 2.5 | 3.1 | 1.6 | | 4.4 |
| E4 | 0.35 | 8.8 | 140 | 76 | 2.2 | 3.1 | 1.6 | | 3.6 |
| SC1 | 5.9 | 2.7 | 275 | 6 | 14 | <1 | <1 | | 3.1 |
| SC2 | 10.5 | 0.2 | 168 | 1 | 1.9 | <1 | <1 | | 2.6 |
| S1 | 88.3 | 0.015 | 73 | 26 | 19 | <1 | 4.9 | | 1.3 |
| S2 | 13.6 | 0.002 | 4 | 24 | 4 | <1 | 2.2 | | 0.4 |

Thus the invention provides an effective solvent extraction process for the separation of cadmium from zinc and nickel wherein the exact process variables must be determined in a particular situation.

**Claims**

1. A process for the selective solvent extraction of a first metal from an aqueous solution which contains said first metal and a second metal, comprising the steps of contacting the aqueous solution with an organic extractant phase in which 50% of the first metal is extracted from the aqueous solution at a lower pH than that at which 50% of the second metal is extracted, separating the resultant aqueous and organic phases, and recovering the first metal from the organic phase, said process being characterised in that the organic extractant phase comprises a trialkylphosphine sulphide, a carboxylic acid and an organic diluent.

2. A process as claimed in claim 1, wherein the first metal is cadmium.

3. A process as claimed in claims 1 or 2, wherein the second metal is zinc, nickel, thallium, iron, magnesium, calcium, cobalt or manganese.

4. A process as claimed in claims 1, 2 or 3, wherein the concentration of trialkylphosphine sulphide in the organic extractant phase is 0.2 to 1.0M and the concentration of carboxylic acid in the organic extractant phase is 0.2 to 1.0M.

5. A process for the selective solvent extraction of cadmium from aqueous solutions thereof in which the cadmium is present together with either or both of nickel and zinc, the process comprising the contacting of the aqueous solution with an organic phase comprising 0,2 to 1M of a trialkylphosphine sulphide ($R_3PS$) together with from 0,2M to 1M carboxylic acid extractant in an organic diluent; separating the resultant aqueous and organic phases; and, stripping cadmium from the organic extractant phase.

6. A process as claimed in any one of the preceding claims, in which the trialkylphosphine sulphide and carboxylic acid extractants are present in the organic phase in substantially equal molar proportions.

7. A process as claimed in any of the preceding claims, in which the concentration of each of the trialkylphosphine sulphide and carboxylic acid extractants is from 0,25M to about 5,0M.

8. A process as claimed in any one of the preceding claims, in which the organic to aqueous phase ratio is from 1 : 2 to 2 : 1.

9. A process as claimed in claim 8, in which the phase ratio is about 2 : 1.

10. A process as claimed in any one of claims 3-9, in which the pH of the aqueous solution is adjusted according to the equilibrium pH of cadmium extraction when compared to that of zinc, nickel or both, as the case may be.

11. A process as claimed in any one of the preceding claims, in which the process is carried out in a plurality of countercurrent stages.

12. A process as claimed in claim 11, in which the process is carried out in 3 or 4 countercurrent stages.

13. A process as claimed in any one of the preceding claims, in which stripping of the cadmium from the organic phase is carried out using sulphuric acid at an organic to aqueous phase ratio of from 5 : 1 to 10 : 1.

14. A process as claimed in any one of the preceding claims, in which the resultant strip solution containing the extracted cadmium is subjected to electro-winning to produce cadmium metal.

15. A process as claimed in any one of claims 1 to 13, in which the cadmium is recovered from the strip solution by crystallisation.

16. A process as claimed in any one of the preceding claims, in which the trialkylphosphine sulphide is triisobutylphosphine sulphide.

17. A process as claimed in any one of the preceding claims, in which the carboxylic acid extractant is 3,5-diisopropylsalicylic acid.

18. A process as claimed in any one of the preceding claims, in which any co-extracted zinc or other impurities are scrubbed from the organic phase using dilute sulphuric acid prior to stripping and the spent scrub liquor is returned to the extraction circuit.

## EUROPEAN SEARCH REPORT

European Patent Office

Application Number
EP 94 30 2166

### DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| A | EP-A-0 482 160 (ERCROS) * page 2 * | 1 | C22B3/40 |
| A | DE-A-33 42 211 (CHEMISCHE FABRIK BUDENHEIM RUDOLF A. OETKER) * page 4 - page 5 * | 1 | |
| A | SOVIET INVENTIONS ILLUSTRATED Section Ch, Week E31, 15 September 1982 Derwent Publications Ltd., London, GB; Class J01, AN 65611 E/31 & SU-A-870 472 (AS AZERB NON ORG CH) 7 October 1981 * abstract * | 1 | |
| A | EP-A-0 113 454 (AMERICAN CYANAMID) * claim 1 * | 1 | |
| A | FR-A-1 512 813 (ASPRO - NICHOLAS) * claim 1 * | 1 | |

TECHNICAL FIELDS SEARCHED (Int.Cl.5)

C01G
C22B

The present search report has been drawn up for all claims

| Place of search | Date of completion of the search | Examiner |
|---|---|---|
| BERLIN | 7 June 1994 | Sutor, W |